# EUROPEAN PATENT SPECIFICATION

(11) **EP 2 795 346 B1**
(45) Date of publication and mention of the grant of the patent: **17.07.2019**
(21) Application number: 12820910.3
(22) Date of filing: 13.12.2012
(51) Int. Cl.: G01Q 30/02

(54) **OPTICAL AND ATOMIC FORCE MICROSCOPY INTEGRATED SYSTEM FOR MULTI-PROBE SPECTROSCOPY MEASUREMENTS APPLIED IN A WIDE SPATIAL REGION WITH AN EXTENDED RANGE OF FORCE SENSITIVITY.**
INTEGRIERTES OPTISCH- UND RASTERKRAFTMIKROSKOPIESYSTEM FÜR MULTISONDENSPEKTROSKOPIENMESSUNGEN MIT EINEM VERBREITETEN KRAFTEMPFINDLICHKEITSINTERVALL, AUF EIN BREITES RÄUMLICHE BEREICH ANGEWENDET
SYSTÉME INTEGRÉ DE MICROSCOPIES À FORCE OPTIQUE ET À FORCE ATOMIQUE POUR DES MÉSURES DE SPECTROSCOPIE MULTISONDE AVEC UN INTERVAL DE SENSIBILITÉ AUX FORCES ÉLARGI SUR UNE GRANDE RÉGION SPATIALE

(30) Priority: 21.12.2011 IT MI20112295
(43) Date of publication of application: 29.10.2014
(73) Proprietor: Fondazione Istituto Italiano di Tecnologia, 16163 Genova (IT)
(72) Inventor: DIFATO, Francesco, 16154 Genova (IT); TORRE, Bruno, 17044 Savona (IT); DIASPRO, Alberto, 16124 Genova (IT); BENFENATI, Fabio, 16167 Genova (IT); CINGOLANI, Roberto, 16143 Ceranesi (GE) (IT)
(74) Representative: Perani & Partners S.p.A.
(86) International application number: PCT/IB2012/057280
(87) International publication number: WO 2013/093732

(56) References cited:
- CN-A- 101 788 571
- JP-A- 2001 165 840
- JURGEN H.G. HUISSTEDE ET AL: "Combining optical tweezers and scanning probe microscopy to study DNA-protein interactions", MICROSCOPY RESEARCH AND TECHNIQUE, vol. 70, no. 1, 1 January 2007 (2007-01-01), pages 26-33, XP055024887, ISSN: 1059-910X, DOI: 10.1002/jemt.20382
- SHIVASHANKAR G V ET AL: "Single DNA molecule grafting and manipulation using a combined atomic force microscope and an optical tweezer", APPLIED PHYSICS LETTERS, AIP, AMERICAN INSTITUTE OF PHYSICS, MELVILLE, NY, US, vol. 71, no. 25, 22 December 1997 (1997-12-22), pages 3727-3729, XP012019329, ISSN: 0003-6951, DOI: 10.1063/1.120495 cited in the application

## Description

The present invention concerns an optical and atomic force microscopy measurement integrated system.

An optical and atomic force microscopy measurement system was proposed in G.V Shivashankara and A. Libchaber; "Single DNA molecule grafting and manipulation using a combined atomic force microscope and an optical tweezer", Center for Studies in Physics and Biology, The Rockefeller University, New York, New York 10021; Appl. Phys Lett 71 (25), 22 December 1997. Such a measurement system consists of an atomic force microscope (AFM) having a cantilever that interacts with a sample to be analyzed and an optical tweezer that holds a microsphere of a single DNA molecule on the tip of the cantilever. Using the AFM microscope the elastic response of the single molecule is measured.

Another measurement system was proposed in J. H. G. Huisstede, K. O. van der Werf, M.L. Bennink, V. Subramaniam; Biophysical Engineering and MESA+ institute for nanotechnology, Department of Science and Technology, University of Twente, P.O. Box 217,7500 AE Enschede, The Netherlands; 21 February 2005 / Vol. 13, No. 4 / OPTICS EXPRESS 1113. This disclosure describes an optical tweezer used to trap microspheres at the focus of the tweezer itself. The optical tweezer can also be used to measure forces exerted on the microspheres trapped in the focus.
In CN 101788571 A and JP2001-165840 combined AFM-optical tweezer systems are disclosed.

Finally, in Peter Domachuk, Eric Magi, and Benjamin J. Eggleton CUDOS, School of Physics, University of Sydney, New South Wales 2006, Australia - Mark Cronin-Golomba, Department of Biomedial Engineering, Tufts University, Medford, Massachusetts 02155; Applied Physics Letters 89, 071106 (2006), the use of an optical tweezer as an optical actuator of a tapered optical fibre used as a cantilever is proposed.

The systems described above are limited to the measurement of a single molecule in a single spot of a sample. However, it would be desirable to perform measurements over a wide area of a sample by measuring the mechanical and visco-elastic response properties thereof.

The aim of the present invention is to propose an optical and atomic force microscopy measurement integrated system that satisfies the aforementioned requirement.

Such a aim is accomplished by an optical and atomic force microscopy measurement integrated system in accordance with claim 1.

Further characteristics and advantages of the measurement integrated system according to the present invention shall become clearer from the following description of a preferred embodiment thereof, given in a indicative and non limitative manner, with reference to the attached figures, in which:
- figure 1 shows a schematic view of an optical and atomic force microscopy measurement integrated system according to the invention,

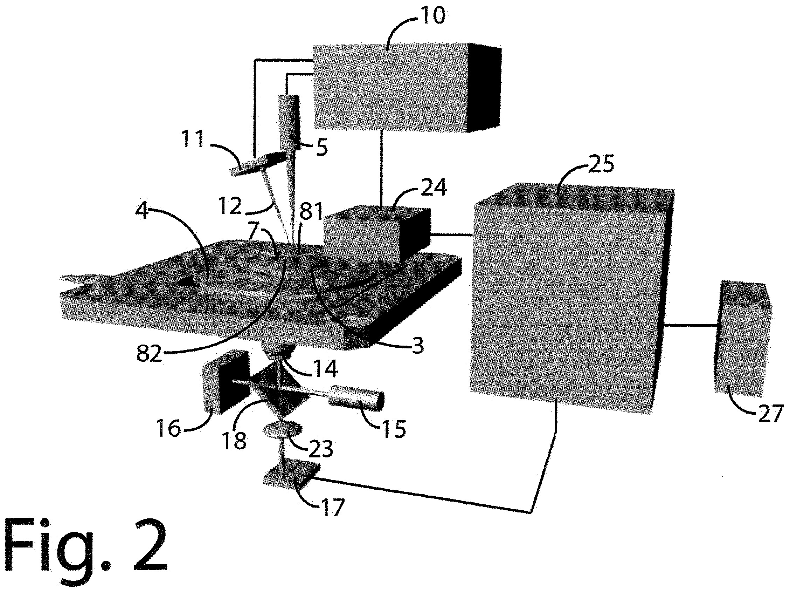

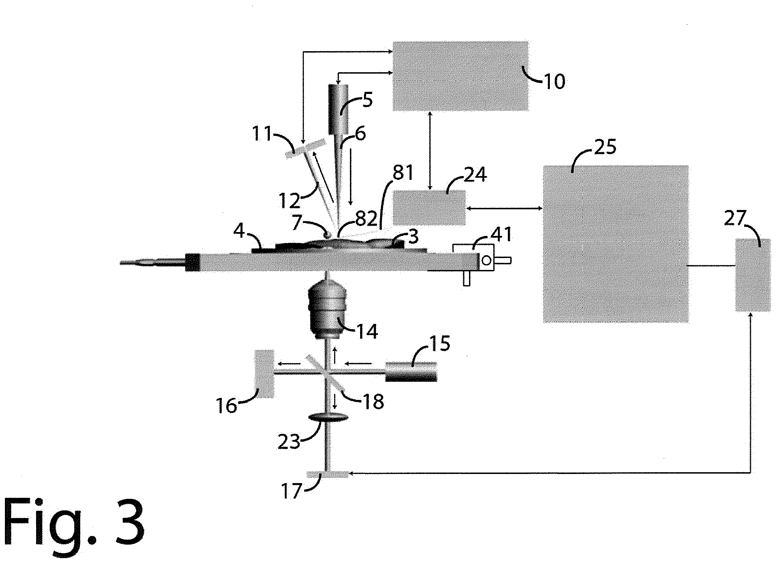

- figures 2 and 3 show different schematic views of the system of figure 1,
- figure 4 shows graphs obtained from simulations of the system of figure 1;
- figure 5 shows an example of application of the system of figure 1 on a sample to be analyzed.

With reference to the attached figures, reference numeral 100 wholly indicates an optical and atomic force microscopy measurement integrated system according to the present invention.

The system 100 comprises an atomic force microscope (AFM) 1 and an optical tweezer 2.

The AFM microscope 1 comprises a first probe 8 apt to interact with a sample 3 to be analyzed.

In the example the sample 3 is placed on a sample-carrying plate 4 that can be stationary or mounted on a mobile support.

In accordance with an embodiment, the first probe 8 comprises a cantilever 81, advantageously flexible, provided at a free end thereof 81a with a tip 82 with bending radius of the order of a few nanometres, preferably less than 10 nm.

The AFM microscope 1 is provided with first movement means 24 adapted to determine a relative movement of the first probe 8, along the three spatial coordinates X_{AFM}, Y_{AFM}, Z_{AFM}, and thus of the tip 82 of the cantilever 81, with respect to the sample 3.

In an embodiment, the first movement means 24 comprise a device 24a for moving the tip 82 along an axis Z_{AFM} and a device 24b for moving the sample-carrying plate 4 in the plane X_{AFM}, Y_{AFM} so as to carry out a relative movement along the three spatial coordinates X_{AFM}, Y_{AFM}, Z_{AFM}.

The movement devices 24 can be piezoelectric positioners.

The positioning of the tip 82 with respect to the sample 3 has a typical accuracy in the order of a nanometre.

It should be noted that the relative movement of the tip 82 with respect to the sample 3, i.e. with respect to the sample-carrying plate 4, can be implemented with a different architecture. In particular, the first movement means 24 can be integrated in the support of the tip 82 or in the sample-carrying plate 4.

In accordance with an embodiment, a control device 10 is connected to the first movement means 24 and controls the movements of the cantilever 81 along three spatial coordinates X_{AFM}, Y_{AFM}, Z_{AFM}, and controls the distance between tip 82 and the surface of the sample 3.

The measurement system 100 also comprises first measurement means adapted to generate a first measurement signal representative of the variations of relative position of the first probe 8 with respect to the sample 3.

In an example, the force that acts between the tip 82 and the sample 3 is measured through the deflection of the cantilever 81, in a contact mode or in a dynamic mode, through the analysis of the variation of the oscillation parameters of the cantilever 81.

The first measurement means can be of optical, piezoelectric, resistive or electric type.

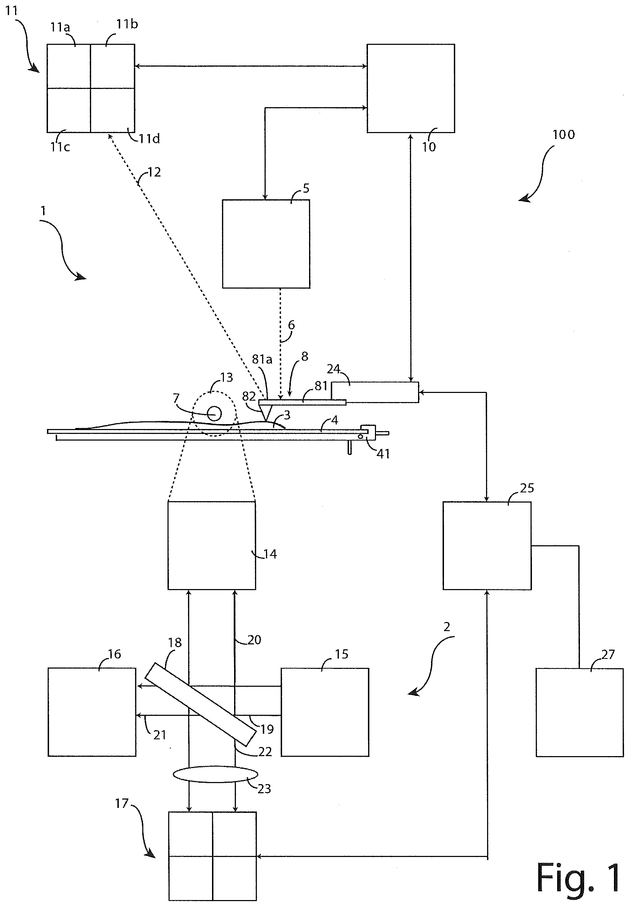

In the embodiment shown in figure 1, the first measurement means comprise a first optical source 5, which is focused on the rear of the cantilever 81. The first optical source 5 can be a laser or a superluminous diode apt to emit an optical beam 6 incident on the end 81a of the cantilever 81 at the tip 82. The incidence of the optical beam 6 on the end 81a of the cantilever 81 produces a reflected beam 12 which is received by a first position-sensitive detector 11, in the example an optical detector, which is a quadrant photodiode (QPD) in the present embodiment. The electric signal acquired by QPD 11 provides a measurement of the deflection of the cantilever 81 through the imbalance between the two upper quadrants 11a and 11b and the lower ones 11c and 11d, and a measurement of the torsion of the cantilever 81 in the plane through the lateral imbalance between the right quadrants 11b and 11d and the left ones 11a and 11c of the QPD. In this way it is possible to detect the perpendicular forces (axis Z_{AFM}) and the forces in the plane (X_{AFM}, Y_{AFM}) of the sample 3.

In some embodiments, the QPD is made of silicon and the first optical source 5 is a diode laser or a superluminous diode that emits in the visible (red, 630 nm) or in the near infrared (830 nm, 880 nm or 1064 nm) so as to obtain a good response from silicon that has a maximum efficiency around 900 nm. The use of visible light can allow a simplification in the alignment step of the light beam on the cantilever even with the naked eye. However, in case of use of the technique in a biological environment it may be preferred to use a source emitting in the near infrared to reduce the effects of photodamage on the sample. The alignment of the beam in the near infrared can be carried out through common CCD or CMOS video cameras.

The first measurement means are connected to the control device 10 that receives and processes the signals acquired by the first measurement means.

The optical tweezer 2 is adapted to emit an optical beam having its focus on a portion of the sample 3. Such an optical beam of the optical tweezer 2 is configured to hold in focus a second probe 7 apt to be associated with the sample 3. In this way, the optical tweezer 2 creates an optical trap for the second probe 7.

For this purpose, in accordance with an embodiment, the optical tweezer 2 comprises a second laser source 15 that emits an optical beam 19 directed onto a beam splitter 18, e.g. 50/50, which splits the beam 19 into a first portion of optical beam 20 and a second portion of optical beam 21. The first portion of optical beam 20 is deviated towards a microscope lens 14, e.g. 100x, with high numerical aperture, i.e. NA > 1, which focuses the first portion of beam 20 in a spot 13 of the sample 3 having a size close to the diffraction limit. The strong focusing creates the "optical trap" that capable of holding and manipulating the second probe 7, which can thus be moved by varying the position of the focus on the sample 3 as will be described hereafter.

Preferably, the laser source 15 of the optical trap emits in the band of frequencies in the near infrared to limit the photodamage of the sample 3, and makes it possible to capture objects of a size that range from few tens of nanometres up to several tens of microns.

The second portion of optical beam 21 of the beam emitted by the second laser source 15 is transmitted by the optical beam splitter 18 and strikes an optical detector 16 (a photodiode), which detects the beam emitted by the laser source 15 and is used to measure the optical power of the laser on the sample. Such a measurement allows to quantify the noise level, during measurement, introduced by possible fluctuations of the second laser source 15.

In an embodiment, the second probe 7 is a microsphere of dielectric material. For example, the microsphere 7 is made of polystyrene or silica and has a diameter that ranges from ten nanometres to a few tens of micrometres.

In an embodiment, the optical tweezer 2 is arranged on the opposite side of the sample 3 with respect to that of the cantilever 81 of the AFM 1 and it is built like an inverted optical microscope that operates in epi-illumination.

As stated above, the optical tweezer 2 is provided with second movement means apt to determine a relative movement of the focus with respect to the sample 3 so as to determine a relative movement of the optical trap and thus of the second probe 7 with respect to the sample 3.

In an embodiment, the second movement means comprise a movement device Z_{PFM} in the support of the lens and a movement device (X_{PFM}, Y_{PFM}) in the support of the sample-carrying plate 4.

In a different embodiment, the second movement means can be integrated in the support of the sample-carrying plate 4.

The second movement means thus allow the relative positioning of the second probe 7 with respect to the sample 3 in the three dimensions with accuracy of the order of the nanometre.

In this way, the optical trap for the second probe 7, and thus the second probe 7, and the tip 82 of the AFM 1, and thus the first probe 8, can be positioned independently with respect to the sample 3 and placed in contact in different positions on the surface of a biological sample 3 (i.e. cells or tissues, etc.), having six independent positioning axes available.

The presence of six independent positioning axes, three for the tip 82 of the AFM 1 and three for the trap of the microsphere 7 of the optical tweezer 2, allows the simultaneous and independent alignment of the two probes 7, 8 in different positions of the sample 3 with measured and controlled interaction, both with nanometric resolution. The independent positioning of the two probes 7, 8 on the sample 3 thus allows scanning and displaying of the sample in an area of a few millimetres with nanometre accuracy.

Typically, an optical confinement volume is obtained with dimensions of a few tens of nanometres in X_{AFM} (X_{PFM}) and Y_{AFM} (Y_{PFM}), and of about two hundred nanometres along the optical axis Z_{AFM} (Z_{PFM}) and a spatial resolution in the positioning of the trapped object given by the second movement means of a few nanometres.

The measurement system 100 further comprises second measurement means apt to generate a second measurement signal representative of the variations in relative position of the second probe 7 with respect to the sample 3.

In accordance with an embodiment the second measurement means comprise a second position-sensitive detector 17, in the example an optical detector. In particular, the sample-carrying plate 4 is made of a material transparent to the optical beam emitted by the laser source 15 of the optical tweezer 2, for example it is a sheet of glass like a microscope slide. The lens 14 focuses the beam trapping the dielectric object, e.g. the microsphere 7, and simultaneously collects the light backscattered by the captured object, directing the backscattered beam through the beam splitter 18 on the second position-sensitive optical detector 17, such as a quadrant photodiode (QPD).

The position-sensitive optical detector 17 is positioned in a plane optically conjugated with the rear focal plane of the lens 14. At the sample 3, the optical beam interferes with the trapped microsphere 7 that acts as a probe. On the rear focal plane, interference fringes are produced that are projected on the second detector 17 by means of a focusing lens 23 arranged in front of the second detector 17. The quadrant photodiode thus operates as an interferometer since it can evaluate the position and the intensity of the interference fringes contained in the interference pattern reflected by the sample.

The second positioning detector 17 allows the determination of the position of the second probe 7 trapped on the focal plane, i.e. in the coordinates (X_{PFM}, Y_{PFM}) so as to determine the position and the lateral displacement of the second probe 7. The axial position of the object, i.e. along the axis Z_{PFM}, can be determined by measuring the total intensity of the light backscattered by the probe, measured by means of detector 17.

Preferably, in order to avoid cross-talk between the first and the second measurement signal detected by the first and second measurement means, the optical beams of the first and second laser have different wavelengths. Preferably, the frequencies of the optical beams emitted by the first and second laser source are selected in the range of frequencies of the near infrared to minimise the structural damage of the biological samples due to irradiation. In some embodiments, in front of at least one of the detectors 11 and 17 there is an optical filter apt to cut a range of frequencies that it is not wished it reaches the detector.

It should be noted that the force of both probes 7 and 8 is calibrated. The optical tweezer 2 has a sensitivity in the measurement of force of less than a piconewton and the maximum detectable force is a few hundreds of pN. In the AFM microscope, the accuracy is of the order of tens of pN and the maximum force applicable or measurable by the cantilever 81 is of the order of hundreds of nN. In this way, the ranges of force of the two probes are different and complementary to one another.

The calibration of the cantilever 81 can be carried out in a per se known way. For example, the calibration is carried out through one of the following methods:
- theoretical calculations based on geometry and properties of the materials (e.g. based on a rectangular beam approximation);
- measurement of the gravitational deflection by addition of known masses;
- measurement of the deflection on the reference cantilever of known elastic constant, and
- measurement of viscous deflection due to the immersion medium of the cantilever.

Examples of calibration methods suitable for the purposes of the present disclosure are described in N.A. Burnham et al., "Comparison of calibration methods for atomic-force microscopy cantilevers" Nanotechnol. 14, 1-6 (2003) e in C.T. Gibson, G.S. Watson, and S. Myhra, "Scanning force microscopy calibrative procedures for 'best practice'" Scanning 19, 564-581 (1997).

Further examples of calibration methods suitable for the purposes of the present disclosure are described in:
A. Torii et al., "A method for determining the spring constant of cantilevers for atomic force microscopy", Meas. Sci. Technol. 7, 179-184 (1996);
J.P. Cleveland et al "A nondestructive method for determining the spring constant of cantilevers for scanning force microscopy" Rev. Sci. Instrum. 64, 403-405 (1995), and
J.L. Hutter and J. Bechhoefer, "Calibration of atomic-force microscope tips" Rev. Sci. Instrum. 64, 1868-1873 (1993).

The measurement system 100 also comprises processing means apt to receive in input the first measurement signal emitted by the first measurement means and the second measurement signal emitted by the second measurement means to generate an output signal representative of the sample 3.

In an embodiment, the AFM microscope 1 operates in a contact mode in which the tip 82 is held in static contact with the sample 3 through a constant contact force and the static deflection of the cantilever 81 is measured.

In a further embodiment, the AFM microscope 1 operates in contact mode and an AC modulation force is added to a constant average contact force.

In another embodiment, the AFM microscope 1 operates in dynamic mode, in which the tip 82 of the cantilever 81 is excited around one or more of its resonant frequencies and the variation of at least one of the oscillation parameters is measured - frequency, phase and amplitude of the cantilever 81 due to the contact with the sample 3.

It should be noted that the contact mode with AC modulation force and the dynamic mode allow the measurement of the response of the sample 3 to dynamic stresses.

The optical tweezer 2 has a rigidity of two orders of magnitude less than that of the AFM microscope 1, given by the different system for trapping the microsphere 7, which is, in this case, of the optical type and not of mechanical type.

In the absence of the sample 3, the two force responses measured by the two probes 7, 8 are not correlated to one another, except for by the presence of the fluid in which both the probes are immersed.

When the sample 3 is arranged between the two probes 7, 8, there is a correlation between the two probes 7, 8 and the dynamics of the response depends on the dynamic behaviour of the sample 3 itself.

In particular, if to one of the two probes, for example the first probe 8, placed in interaction with the sample with a constant static load in a point A of the surface of the sample, an alternating current (AC) force modulation (force modulation mode) is added, this dynamic modulation will propagate inside the sample in a way dependent on the mechanical properties, the internal structure and on the composition of the sample itself. Such modulation can be detected by the second probe 7 in a different point B of the surface of the sample to measure the propagation of the signal between the two points. As A and B vary, propagation maps of the signal inside the sample can be constructed to verify structural and/or functional characteristics, such as anisotropy, effects of the geometry thereof, ageing phenomena or the response of the sample to mechanical stresses, when the measurement is carried out *in vivo* or on an active medium. If the AC modulation of the force applied is equipped with a particular time structure (e.g. sinusoidal modulation with variable frequency or amplitude or with a more complex waveform, or by means of a series of periodic or random pulses, etc.), it is also possible to obtain a measurement of the frequency response of the sample to variable stresses, in addition to the measurement of the response to different constant loads that can be obtained in a simple manner by varying the average load force.

Moreover, the measurement of the harmonic distortion of the force and of the delay time in the propagation of the signal (or of the phase) make it possible to evaluate plastic and mechanical dissipation properties inside the sample as a function of frequency. In general, given the different ranges of applicable forces and the different sensitivities, the cantilever 81 (i.e. AFM 1) is used as a probe to induce a stress and the microsphere 7 through the optical tweezer 2 as a probe to read the response of the sample to the stress. However, the present disclosure does not rule out a method and a system in which the microsphere 7 acts as a probe that induces the stress and the cantilever 81 with tip 82 as a probe that reads the response.

The measurement system 100 therefore comprises control means apt to generate a stimulation signal to induce a stress at one of the two probes 7, 8. In this case the processing means process the stimulation signal and the measurement signals to generate the output signal.

These types of analyses are carried out by coupling the first measurement signal of the AFM 1 and the second measurement signal of the optical tweezer 2 with the processing means.

Such processing means allow the processing and analysis of the time structure of the measurement signal by means of cross-analysis techniques such as, for example, cross-correlation, stimulus-response analysis, harmonic distortion, lock-in synchronous amplification or spectrum analysis or Bode diagram.

In the configuration shown in figure 1, the control means comprise a lock-in amplifier 25 connected to the first movement means 24 of the cantilever 81 and to the second position-sensitive detector 17. The lock-in amplifier 25 is configured so as to send to the first movement means 24 of the cantilever 81 a trigger signal of known shape and amplitude and to receive from the first position-sensitive detector 11 and from the second position-sensitive detector 17 of the optical tweezer 2 a signal indicative of the mechanical response of the sample to the trigger signal.

The lock-in amplifier 25 is connected to a voltage generator 27 adapted to generate time oscillating signals. Then a force of known shape and amplitude is applied by means of the tip 82 of the AFM 1 in a specific position of the sample 3.

It should be noted that the optical system can operate symmetrically, i.e. the lock-in amplifier 25 can send a trigger signal to the second movement means of the optical tweezer 2 and receive the response from the first position-sensitive detector 11 and from the second position-sensitive detector 17. However, the system configuration of figure 1 is preferred since the response signal is produced by the probe that has a greater sensitivity of measurement, i.e. the optical tweezer 2.

The combined use of the AFM microscope 1 and of the optical tweezer 2 thus allows the simultaneous measurement of the force between two different points of the same sample and thus makes it possible to analyse the spatial propagation of a force in the sample through an area defined by the geometry of the sample itself and by the distance of the two probes 7 and 8, and limited only by the range of movement able to be actuated with the movement means. For example, by means of the present measurement system, it is possible to produce a two-dimensional mapping of the organisation of the cells in a biological tissue or the propagation of a stress from cell to cell.

Hereafter we will describe an optical microscopy measurement method over large areas carried out using the measurement system 100 of the present invention.

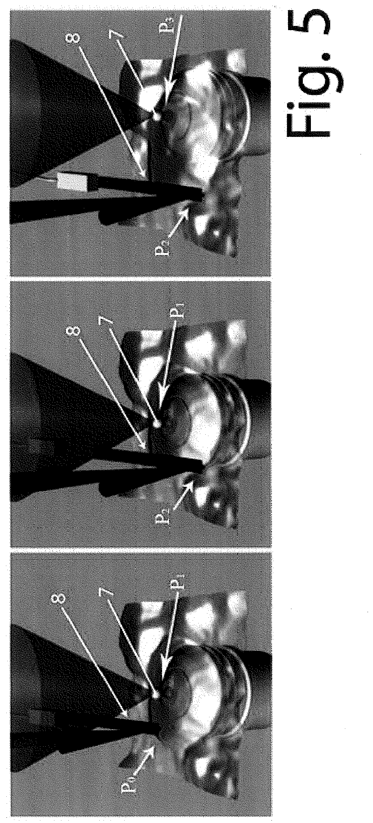

With reference to figure 5, when both the AFM optical microscope 1 and the optical tweezer 2 are operative and aligned with one another so that both the microsphere 7 and the tip 82 of the cantilever 81 are in contact with the sample 3, the lens 14 is focused on the microsphere 7 that is optically trapped by the optical beam produced by the second laser source 15 in a given position P₁ of coordinates (X₁, Y₁, Z₁) of the sample 3 whereas the tip 82 is in contact in a position P₀ of coordinates (X₀, Y₀, Z₀). The trapping rigidity of the optical tweezer 2 on the microsphere 7 is calibrated by Brownian motion analysis of the microsphere trapped in the focus of the lens 14. In position P₁, the interaction of the microsphere 7 with the sample 3 is detected by measuring the variations of the Brownian motion of the microsphere 7. By acting on the first and second movement means it is possible to move the tip 82 into a position P₂ of coordinates (X₂, Y₂, Z₂) and the microsphere 7 into a position P₃ of coordinates (X₃, Y₃, Z₃).

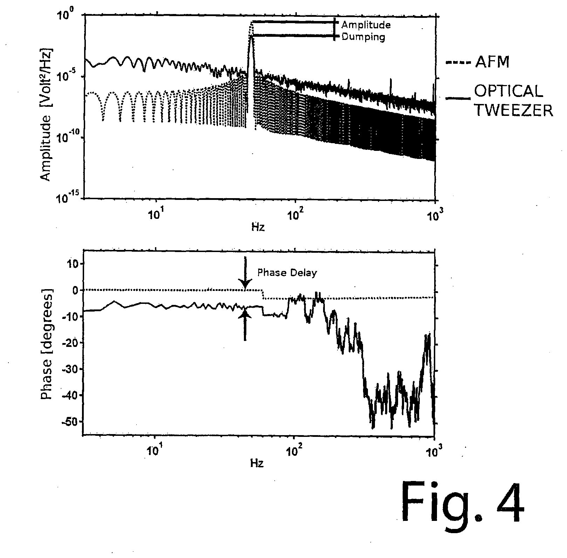

In the case given in figure 4 we show how the stress induced by the cantilever 81 of the AFM 1 creates an oscillation that propagates in the sample and therefore influences the motion of the trapped microsphere 7. Since the trapping of the microsphere 7 is calibrated in force, it is possible to quantify the range of forces exerted in the sample. In particular, by using a sinusoidal modulation on the AFM with given amplitude and frequency, there is a peak in the power spectrum at 40 Hz and amplitude 1 µm. The measurement probe in this case is the trapped microsphere and its power spectrum shows the oscillation of the Brownian motion with a peak of less than 40 Hz. From the analysis of the phases of the AFM modulation and measurement signals of the trapped microsphere it can be seen that there is a phase delay between the oscillations imparted by the AFM and the oscillations measured by the trapped microsphere.

The amplitude dumping of the peak at 40 Hz and the phase delay represent two parameters that quantify the propagation of the mechanical stress in the sample and thus allow the biophysical properties thereof to be deduced.

This represents an example of how it is possible to quantify the properties of a propagation medium between the two probes 7, 8. In the case of a biological sample it is possible to quantify the viscoelastic properties thereof without having to know *a priori* its structural organisation. Technically, the mechanical response measured with the trapped microsphere 7 is measured by means of the interference pattern reflected by the microsphere 7 itself and collected by the position-sensitive detector 17. The tip 82 of the cantilever 81 is positioned in the proximity of the sample in the position P₀ of coordinates (X₀, Y₀, Z₀) and different from P₁ (X₁, Y₁, Z₁) by means of the first movement means 24 of the AFM microscope 1. The interaction between the sample 3 and the tip 82 is controlled by the control device 10 that receives the signal indicative of the mechanical deflection of the cantilever 81 from the position-sensitive detector 11.

A known external force can be applied through the sending of a trigger signal to the first movement means 24 of the cantilever 81. In the embodiment of figure 1, the trigger signal is generated by a signal generator, also used as a reference for the lock-in amplifier 25 that analyses the signals coming from the position detectors 5 and 17. Alternatively, the signal coming from the excited probe (for example the signal from the position detector 5 of the AFM 1) can be used as a reference for the lock-in to detect the signal of the reading probe (the displacement signal 17 of the microsphere 7, in this example). In particular, the trigger signal is characterised by a known amplitude and temporal evolution. In an embodiment, the trigger signal Vₛ is a sinusoidal signal of known frequency ω₀ and maximum amplitude A₀, represented by the function Vₛ=A₀sin(ω₀t).

The force transmitted from the position P₀ of the sample to the position P₁ is measured by the second probe 7 simultaneously to the application of the force in the position P₀. The response signal Vᵣ detected by the position-sensitive detector 17 is represented by the function Vᵣ=A₁sin(ω₀t+ψ₁).

The response signal is analysed to obtain the information of the trigger in the position where the response is detected. Different methods can be used for the analysis of the response, like for example mutual correlation, analysis of harmonics and lock-in amplification.

In the case in which lock-in amplification is used, whereas a mechanical stimulus is applied in a predetermined position of the sample (P₀), the response to the stimulus is detected, sequentially, in a plurality of positions P₁, P₂, P₃, etc. in the sample . In this way it is possible to produce a mapping of the stress distributed in the sample. From such mapping it is possible to obtain information on the structural properties, for example anisotropic portions, inside the sample.

More generally, the response signal depends on the positions of the two probes and on the measurement parameters, such as amplitude of the stimulus, magnitude of the applied static force, on the different environmental conditions, for example temperature, pH etc. Moreover, if the sample has an evolution over time, like in the case of softening, plastic deformations, ageing as in the case of measurements on live samples, there is a variation of the response at different times t, which can be followed during ageing and evolution cycles in live systems. Hence, in general, there will be a response depending on one or more parameters within a relatively large set of parameters A₁=A₁ (f, ψ,t,X₀,Y₀,Z₀, X₁,Y₁,Z₁, A₀,SL; temperature, etc.), where f is the frequency and ψ is the phase.

Under different conditions there can be simplifications: for example for samples that are stable over time there is no explicit dependency on t; for uniform and isotropic samples the dependency will only be on the distance of the two measurement points etc. The measurement of the response as the parameters vary allows the direct comparison with analytical or simulated models (for example finite element analysis) of the sample. For example, harmonic distortion measurements allow the comparison with elasticity models, whereas a synchronous lock-in or cross-correlation analysis between signals in different positions allows the reconstruction of a propagation map of the signal to evaluate anisotropic responses of the sample.

As can be appreciated from what has been described, the present invention achieves the intended purposes.

Of course, with the purpose of satisfying contingent and specific requirements, a person skilled in the art can make numerous modifications and variations to the invention described above, all anyway within the scope of protection of the invention as defined by the following claims.

## Claims

1. Optical and atomic force microscopy measurement integrated system (100), comprising:
- an atomic force microscope (1) having a first probe (8) apt to interact with a sample (3) to be analyzed,
- first movement means (24) apt to determine a relative movement of said first probe with respect to the sample (3) to be analyzed,
- an optical tweezer (2) apt to emit an optical beam having focus on a portion of the sample to be analyzed,
- a second probe (7) apt to be associated with said sample to be analyzed, wherein:
- said optical beam of the optical tweezer (2) is designed for holding said second probe in said focus,
**and** wherein said measurement system comprises:
- first measuring means (11) apt to generate a first measurement signal representative of the variations of relative position of said first probe (8) with respect to said sample (3),
- second movement means apt to determine a relative movement of said focus with respect to said sample so as to determine a relative movement of said second probe (7) with respect to said sample (3), said first (24) and second movement means are able to move respectively the first (8) and second probe (7) independently with respect to the sample (3) and place the first (8) and second probe (7) in contact in different positions on the surface of the sample (3),
- second measurement means (17) apt to generate a second measurement signal representative of the variations of relative position of said second probe (7) with respect to said sample,
- processing means apt to receive as an input said first measurement signal and said second measurement signal to generate an output signal representative of said sample,
- control means (25, 27) are provided apt to generate a trigger voltage signal to cause a mechanical stress to one of said first and second probes (7,8), said processing means processing said trigger signal and at least one of said first and second measurement signals to generate said output signal.

2. System according to claim 1, wherein said optical tweezer (2) is arranged on the opposite side of the sample (3) with respect to that of the microscope (1).

3. System according to claim 1 or 2, wherein said first movement means are independent from said second movement means so that the first probe (8) and the second probe (7) are apt to be positioned independently with respect to the sample (3) at different positions on the surface of the sample.

4. System according to any one of the previous claims, wherein said control means are connected to:
- one of said first and second movement means to transmit said trigger signal and
- to the other of said first (11) and second (17) measurement means to receive the corresponding measurement signal.

5. System according to any one of the previous claims, wherein said control means comprise a lock-in amplifier (25).

6. System according to any one of claims from 1 to 5, wherein said trigger signal comprises:
- a constant signal apt to impart a constant load of interaction with the sample to a probe and
- a modulation signal apt to impart a force modulation to said one probe,
and wherein said processing means are apt to process said trigger signal and the measurement signal of the other probe to measure the propagation of said modulation signal in said sample.

7. System according to any one of claims from 1 to 6, wherein said first measurement means comprise:
- a first optical source (5) apt to emit an optical beam (6) incident on said first probe (8), said optical beam being incident on said first probe to generate a reflected beam,
- a first position sensitive detector (11) apt to receive the beam reflected by said sample.

8. System according to any one of claims 1 to 7, wherein said second measurement means comprise:
- a second optical source (15) adapted to emit an optical beam (19,20) incident on said second probe (7),
- a second position sensitive detector (17) apt to receive the beam reflected by said second probe.

9. System according to any one of claims 1 to 8, wherein said first probe (8) comprises a cantilever (81) and a tip (82) arranged at a free end of said cantilever.

10. System according to any one of claims 1 to 9, wherein said second probe (7) is a microsphere made of dielectric material.

11. System according to any one of claims 1 to 10, wherein the first and the second probe are calibrated in force.

12. System according to claim 11, when dependent on claim 9, wherein the optical tweezer (2) has a sensitivity in the measurement of force of less than a piconewton and a maximum detectable force of few hundreds pN and the atomic force microscope (1) has an accuracy of the order of tens of pN and the maximum force applicable by the cantilever (81) is of the order of hundreds of nN so that the force ranges of the first and second probes are different and complementary to one another.

## Patentansprüche

1. Integriertes Messsystem (100) der optischen und Rasterkraftmikroskopie, umfassend:
- ein Rasterkraftmikroskop (1) mit einer ersten Sonde (8), die geeignet ist, mit einer zu analysierenden Probe (3) zu interagieren,
- erste Bewegungsmittel (24), die geeignet sind, eine Relativbewegung der ersten Sonde in Bezug auf die zu analysierende Probe (3) zu bestimmen,
- eine optische Pinzette (2), die geeignet ist, einen optischen Strahl mit Fokus auf einen Abschnitt der zu analysierenden Probe zu emittieren,
- eine zweite Sonde (7), die geeignet ist, der zu analysierenden Probe zugeordnet zu werden,
wobei
- der optische Strahl der optischen Pinzette (2) zum Halten der zweiten Sonde in dem Fokus ausgelegt ist,
und wobei das Messsystem Folgendes umfasst:
- erste Messmittel (11), die geeignet sind, ein erstes Messsignal zu erzeugen, das die Schwankungen der relativen Position der ersten Sonde (8) in Bezug auf die Probe (3) darstellt,
- zweite Bewegungsmittel, die geeignet sind, eine Relativbewegung des Fokus in Bezug auf die Probe zu bestimmen, um eine Relativbewegung der zweiten Sonde (7) in Bezug auf die Probe (3) zu bestimmen, wobei die ersten (24) und die zweiten Bewegungsmittel in der Lage sind, die erste (8) und zweite Sonde (7) jeweils unabhängig in Bezug auf die Probe (3) zu bewegen und die erste (8) und die zweite Sonde (7) in Kontakt in verschiedenen Positionen auf der Oberfläche der Probe (3) zu bringen,
- zweite Messmittel (17), die geeignet sind, ein zweites Messsignal zu erzeugen, das die Schwankungen der relativen Position der zweiten Sonde (7) in Bezug auf die Probe darstellt,
- Verarbeitungsmittel, die geeignet sind, das erste Messsignal und das zweite Messsignal als Eingang zu empfangen, um ein für die Probe repräsentatives Ausgangssignal zu erzeugen,
- Steuermittel (25, 27) sind vorgesehen, die geeignet sind, ein Auslösespannungssignal zu erzeugen, um eine mechanische Spannung an einer der ersten und zweiten Sonden (7, 8) zu verursachen, wobei die Verarbeitungsmittel das Auslösesignal und mindestens eines der ersten und zweiten Messsignale verarbeiten, um das Ausgangssignal zu erzeugen.

2. System nach Anspruch 1, wobei die optische Pinzette (2) auf der gegenüberliegenden Seite der Probe (3) in Bezug auf die des Mikroskops (1) angeordnet ist.

3. System nach Anspruch 1 oder 2, wobei die ersten Bewegungsmittel unabhängig von den zweiten Bewegungsmitteln sind, so dass die erste Sonde (8) und die zweite Sonde (7) geeignet sind, unabhängig in Bezug auf die Probe (3) an verschiedenen Positionen auf der Oberfläche der Probe positioniert zu werden.

4. System nach einem der vorhergehenden Ansprüche, wobei die Steuermittel verbunden sind mit:
- einem der ersten und der zweiten Bewegungsmittel zum Übertragen des Auslösesignals und
- zu dem anderen der ersten (11) und der zweiten (17) Messmittel, um das entsprechende Messsignal zu empfangen.

5. System nach einem der vorhergehenden Ansprüche, wobei die Steuermittel einen Lock-in-Verstärker (25) umfassen.

6. System nach einem der Ansprüche von 1 bis 5, wobei das Auslösesignal Folgendes umfasst:
- ein konstantes Signal, das geeignet ist, einer Sonde eine konstante Last der Interaktion mit einer Probe zu vermitteln, und
- ein Modulationssignal, das geeignet ist, der einen Sonde eine Kraftmodulation zu vermitteln,
und wobei die Verarbeitungsmittel geeignet sind, das Auslösesignal und das Messsignal der anderen Sonde zu verarbeiten, um die Ausbreitung des Modulationssignals in der Probe zu messen.

7. System nach einem der Ansprüche von 1 bis 6, wobei die ersten Messmittel Folgendes umfassen:
- eine erste optische Quelle (5), die geeignet ist, einen optischen Strahl (6) zu emittieren, der auf die erste Sonde (8) trifft, wobei der optische Strahl auf die erste Sonde trifft, um einen reflektierten Strahl zu erzeugen,
- einen ersten positionsempfindlichen Detektor (11), der geeignet ist, den von der Probe reflektierten Strahl zu empfangen.

8. System nach einem der Ansprüche 1 bis 7, wobei die zweiten Messmittel Folgendes umfassen:
- eine zweite optische Quelle (15), die angepasst ist, um einen optischen Strahl (19, 20) zu emittieren, der auf die zweite Sonde (7) trifft,
- einen zweiten positionsempfindlichen Detektor (17), der geeignet ist, den von der zweiten Sonde reflektierten Strahl zu empfangen.

9. System nach einem der Ansprüche 1 bis 8, wobei die erste Sonde (8) einen Tragarm (81) und eine Spitze (82) umfasst, die an einem freien Ende des Tragarms angeordnet ist.

10. System nach einem der Ansprüche 1 bis 9, wobei die zweite Sonde (7) ein Mikrokügelchen aus dielektrischem Material ist.

11. System nach einem der Ansprüche 1 bis 10, wobei die erste und die zweite Sonde in Kraft kalibriert sind.

12. System nach Anspruch 11, wenn von Anspruch 9 abhängig, wobei die optische Pinzette (2) eine Empfindlichkeit bei der Kraftmessung von weniger als einem Pikonewton und eine maximal nachweisbare Kraft von wenigen hundert pN aufweist und das Rasterkraftmikroskop (1) eine Genauigkeit in der Größenordnung von Zehnen von pN aufweist und die vom Tragarm (81) anwendbare maximale Kraft in der Größenordnung von Hunderten von nN liegt, so dass die Kraftbereiche der ersten und der zweiten Sonde unterschiedlich und komplementär zueinander sind.

## Revendications

1. Système intégré de mesure par microscopie optique et à force atomique (100), comprenant :
- un microscope à force atomique (1) ayant une première sonde (8) apte à interagir avec un échantillon (3) à analyser,
- des premiers moyens de déplacement (24) aptes à déterminer un déplacement relatif de ladite première sonde par rapport à l'échantillon (3) à analyser,
- une pince optique (2) apte à émettre un faisceau optique ayant un foyer sur une partie de l'échantillon à analyser,
- une seconde sonde (7) apte à être associée avec ledit échantillon à analyser, dans lequel :
- ledit faisceau optique de la pince optique (2) est conçu pour maintenir ladite seconde sonde dans ledit foyer,
et dans lequel ledit système de mesure comprend :
- des premiers moyens de mesure (11) aptes à générer un premier signal de mesure représentatif des variations de la position relative de ladite première sonde (8) par rapport audit échantillon (3),
- des seconds moyens de déplacement aptes à déterminer un déplacement relatif dudit foyer par rapport audit échantillon afin de déterminer un déplacement relatif de ladite seconde sonde (7) par rapport audit échantillon (3), lesdits premiers (24) et seconds moyens de déplacement sont aptes à déplacer respectivement la première (8) et la seconde sonde (7) indépendamment par rapport à l'échantillon (3) et à placer la première (8) et la seconde sonde (7) en contact dans différentes positions sur la surface de l'échantillon (3),
- des seconds moyens de mesure (17) aptes à générer un second signal de mesure représentatif des variations de la position relative de ladite seconde sonde (7) par rapport audit échantillon,
- des moyens de traitement aptes à recevoir en entrée ledit premier signal de mesure et ledit second signal de mesure pour générer un signal de sortie représentatif dudit échantillon,
- des moyens de commande (25, 27) sont fournis, aptes à générer un signal de tension de déclenchement pour provoquer une contrainte mécanique sur l'une desdites première et seconde sondes (7, 8), lesdits moyens de traitement traitant ledit signal de déclenchement et au moins l'un desdits premier et second signaux de mesure pour générer ledit signal de sortie.

2. Système selon la revendication 1, dans lequel ladite pince optique (2) est agencée sur le côté opposé de l'échantillon (3) par rapport à celui du microscope (1).

3. Système selon la revendication 1 ou 2, dans lequel lesdits premiers moyens de déplacement sont indépendants desdits seconds moyens de déplacement de telle sorte que la première sonde (8) et la seconde sonde (7) sont aptes à être positionnées indépendamment par rapport à l'échantillon (3) à différentes positions sur la surface de l'échantillon.

4. Système selon l'une quelconque des revendications précédentes, dans lequel lesdits moyens de commande sont connectés à :
- l'un desdits premiers et seconds moyens de déplacement pour émettre ledit signal de déclenchement et
- à l'autre desdits premiers (11) et seconds (17) moyens de mesure pour recevoir le signal de mesure correspondant.

5. Système selon l'une quelconque des revendications précédentes, dans lequel lesdits moyens de commande comprennent un amplificateur de blocage (25).

6. Système selon l'une quelconque des revendications 1 à 5, dans lequel ledit signal de déclenchement comprend :
- un signal constant apte à conférer une charge d'interaction constante avec l'échantillon à une sonde et
- un signal de modulation apte à conférer une modulation de force à ladite une sonde,
et dans lequel lesdits moyens de traitement sont aptes à traiter ledit signal de déclenchement et le signal de mesure de l'autre sonde pour mesurer la propagation dudit signal de modulation dans ledit échantillon.

7. Système selon l'une quelconque des revendications 1 à 6, dans lequel lesdits premiers moyens de mesure comprennent :
- une première source optique (5) apte à émettre un faisceau optique (6) incident sur ladite première sonde (8), ledit faisceau optique étant incident sur ladite première sonde pour générer un faisceau réfléchi,
- un premier détecteur sensible à la position (11) apte à recevoir le faisceau réfléchi par ledit échantillon.

8. Système selon l'une quelconque des revendications 1 à 7, dans lequel lesdits seconds moyens de mesure comprennent :
- une seconde source optique (15) conçue pour émettre un faisceau optique (19, 20) incident sur ladite seconde sonde (7),
- un second détecteur sensible à la position (17) apte à recevoir le faisceau réfléchi par ladite seconde sonde.

9. Système selon l'une quelconque des revendications 1 à 8, dans lequel ladite première sonde (8) comprend un porte-à-faux (81) et une pointe (82) agencée à une extrémité libre dudit porte-à-faux.

10. Système selon l'une quelconque des revendications 1 à 9, dans lequel ladite seconde sonde (7) est une microsphère constituée de matériau diélectrique.

11. Système selon l'une quelconque des revendications 1 à 10, dans lequel les première et seconde sondes sont étalonnées en force.

12. Système selon la revendication 11, lorsque prise en dépendance de la revendication 9, dans lequel la pince optique (2) a une sensibilité dans la mesure de force inférieure à un piconewton et une force détectable maximale de quelques centaines de pN et le microscope à force atomique (1) a une précision de l'ordre de dizaines de pN et la force maximale applicable par le porte-à-faux (81) est de l'ordre de centaines de nN de telle sorte que les plages de force des première et seconde sondes sont différentes et complémentaires l'une à l'autre.
